# DEMANDE DE BREVET EUROPEEN

(11) **EP 1 997 786 A1**
(43) Date de publication de la demande: **03.12.2008**
(21) Numéro de dépôt: 08352009.8
(22) Date de dépôt: 21.05.2008
(51) Int. Cl.: C04B 14/10, C04B 28/14

(54) **Plaque de parement à base de plâte**

(30) Priorité: 21.05.2007 FR 0703588
(71) Demandeur: PLACOPLATRE, 92150 Suresnes (FR)
(72) Inventeur: Geeraert, Emmanuel, 2950 Kappellen (BE); Gaillard, Nathalie, 75010 Paris (FR); Ozouf, Pascal, 77420 Champs sur Marne (FR); Blouvac, Florence, 73000 Chambery (FR); Loizeaud, Guillaume, 75020 Paris (FR); Ghannam, Kenza, 75015 Paris (FR)
(74) Mandataire: Santarelli

(57) **Abrégé**

Une plaque de parement à base de plâtre selon l'invention est notamment du type comportant une âme disposée entre deux feuilles de carton.

La composition de l'âme comprend du gypse choisi dans l'ensemble contenant les gypses naturels et les gypses synthétiques et entre 5 et 40% en poids d'argile.

La masse surfacique de cette plaque est de préférence inférieure à 11 kg/m² pour une épaisseur de plaque de 12,5 mm.

## Description

La présente invention concerne une plaque de parement à base de plâtre.

Il est courant d'utiliser des plaques de parement à base de plâtre pour réaliser des cloisons verticales ou horizontales, telles par exemple des cloisons de séparation ou des plafonds. Ces plaques sont des plaques composites comportant deux couches extérieures en carton et un coeur en gypse. Les normes imposent pour ces plaques des contraintes mécaniques de résistance et de flexion à la charge. Ces plaques de parement n'ont pas de propriétés acoustiques particulières. Bien entendu, intrinsèquement, ces plaques de parement permettent de réaliser une isolation phonique. Toutefois lorsque des performances particulières sont recherchées en termes d'atténuation acoustique, il est habituel d'utiliser en combinaison avec ces plaques de parement des matériaux tels de la laine de verre ou de la laine de roche. En outre, ces plaques de parement sont généralement montées sur des profilés métalliques. Des formes particulières de profilés permettent également d'obtenir de meilleures performances acoustiques.

Il est également connu que des plaques de parement, à base de plâtre ou d'autres matériaux, présentent de meilleures performances acoustiques lorsqu'elles sont plus denses. Ainsi par exemple, pour des plaques de parement en plâtre d'une épaisseur de 12,5 mm (correspondant à l'épaisseur des plaques commercialisées généralement avec la dénomination "BA 13"), la masse surfacique habituelle est de l'ordre de 9 kg/m². Avec une plaque de parement présentant une masse surfacique de 12 kg/m², on obtient une atténuation acoustique avec un gain d'environ 1 à 2 dB.

Toutefois, une augmentation de la masse des plaques de parement entraîne également une augmentation du coût de ladite plaque. En effet, le coût de cette plaque est sensiblement proportionnel au gypse qu'elle contient et donc à son poids.

L'augmentation du poids d'une plaque présente également des inconvénients lors de la pose de cette plaque. En effet, plus la plaque est lourde, plus elle est difficile à manipuler et plus il est difficile de la visser. Ceci est d'autant plus vrai pour les plaques utilisées pour réaliser un plafond ou pour toute cloison disposée en hauteur.

Enfin, les réserves de gypse naturel étant limitées, il fait partie des soucis de l'homme du métier d'économiser le gypse dans la réalisation des plaques de parement à base de plâtre.

Dans l'état de la technique, les documents FR-2 789 677 et FR-2 789 679 décrivent des plaques de plâtre résistant au feu. Ces documents enseignent l'utilisation d'un additif minéral comportant un matériau argileux pour augmenter la résistance au feu de la plaque de plâtre en vue de diminuer la proportion de silice dans la plaque finale. Ainsi, l'additif minéral rajouté ici comporte essentiellement un matériau argileux et la quantité de silice cristalline dans cet additif est au plus égale à environ 15% en poids.

Le document WO-02/06180 concerne également une plaque de plâtre présentant une résistance au feu améliorée. Toutefois, les exemples dans ce document considèrent des argiles contenant 50% de dolomie -qui n'est pas considérée dans la présente demande de brevet comme une argile mais comme un carbonate- et 15% de quartz. De ce fait, la composition en argile des plaques de plâtre révélées par ce document de l'art antérieur est relativement faible dans la composition finale.

Enfin, le document FR-2 727 675 présente une composition pour la fabrication d'éléments de construction allégés, thermiquement et phoniquement isolants. Il s'agit notamment de plaques de plâtre allégées dans lesquelles une pâte composite à base de fibres de papier a été introduite. Ces plaques comportent également de l'argile qui est toutefois rajouté dans la composition pour ses propriétés anti-feu. Les additifs utilisés pour l'isolation phonique sont des particules de chanvre, des fibres végétales ou du liège.

La présente invention a alors pour but de fournir une plaque de parement à base de plâtre qui réponde bien entendu aux normes actuelles en matière de performances mécaniques et qui présente également des performances accrues sur le plan acoustique mais sans toutefois présenter un surpoids trop important par rapport aux plaques de parement "classiques".

Un objectif de la présente invention est notamment de fournir une plaque de parement à base de plâtre qui permette, par rapport à une plaque de parement "classique" (ayant une masse surfacique de 9 kg/m² pour une épaisseur de 12,5 mm) de permettre une atténuation acoustique supérieure de + 3 dB.

Un autre objectif de la présente invention est d'obtenir cette performance acoustique avec une plaque de parement à base de plâtre d'une épaisseur de 12,5 mm et d'une masse surfacique inférieure ou égale à 11 kg/m².

Enfin, un objectif de la présente invention est de fournir une plaque contenant une quantité limitée de gypse afin de limiter la consommation de ce matériau.

A cet effet, la présente invention propose un plaque de parement à base de plâtre, notamment du type comportant une âme disposée entre deux feuilles de carton.

Selon la présente invention, la composition de l'âme comprend du gypse choisi dans l'ensemble contenant les gypses naturels et les gypses synthétiques et entre 5 et 40% en poids d'argile par rapport au poids total de la composition finale, de préférence, entre 10 et 40% en poids d'argile par rapport au poids total de la composition finale.

De façon surprenante, le rajout d'argile dans le gypse utilisé pour réaliser l'âme de la plaque de parement permet d'améliorer de façon sensible les performances acoustiques de la plaque en augmentant la capacité de la plaque à limiter la transmission d'ondes sonores. Alors que jusqu'à présent l'argile était utilisée en faibles quantités pour augmenter la résistance au feu des plaques de parement, il a été remarqué qu'un ajout plus important d'argile permettait d'obtenir d'intéressantes performances acoustiques.

Selon une forme de réalisation préférée, la composition de l'âme comporte entre 5 et 20% -de préférence entre 10 et 20%- en poids d'argile par rapport au poids total de la composition finale. Avec de telles proportions, l'âme de la plaque de parement peut contenir suffisamment de gypse pour donner une bonne rigidité à la plaque. Pour la mise en oeuvre de la présente invention, l'argile utilisée est choisie par exemple dans l'ensemble des phyllosilicates comprenant notamment comme argiles l'antigorite, la chlorite, la dickite, la greenalite, l'halloysite, l'illite, la kaolinite, la montmorillonite, la nacrite, la sépiolite, la smectite et la vermiculite.

Pour limiter le poids de la plaque de parement selon l'invention, et donc avoir une plaque plus facile à manipuler et contenant également moins de gypse, la masse volumique de la plaque de parement est avantageusement inférieure à 880 kg/m³, c'est-à-dire que pour une épaisseur de 12,5 mm, la masse surfacique de la plaque est inférieure à 11 kg/m². L'homme du métier sait ici ajuster le poids de la plaque en rajoutant éventuellement des produits moussants dans la composition pour abaisser la densité globale du matériau obtenu au final.

Dans cet exemple numérique, il est tenu compte de la présence de carton sur les deux faces de la plaque de parement. L'épaisseur de carton sur chaque face est d'environ 0,3 mm et donc l'âme de la plaque présente une épaisseur de 11,9 mm. Le carton est par exemple un carton avec un grammage de 180 g/m². On a donc 360 g de carton par mètre carré de plaque de parement. La densité de l'âme de la plaque de parement est alors inférieure à 894 kg/m³.

Pour améliorer encore les performances acoustiques d'une plaque de parement selon l'invention, la présente invention propose que la composition de l'âme comporte également de la pulpe de carton broyée. La proportion en poids de la pulpe de carton est par exemple inférieure à 1%, de préférence comprise entre 0,2 et 0,6%.

La présente invention concerne également un procédé de fabrication d'une plaque de parement à base de plâtre, notamment du type comportant une âme disposée entre deux feuilles de carton, caractérisé en ce que pour réaliser l'âme de la plaque de parement une charge contenant de l'argile est rajoutée à du gypse choisi dans l'ensemble contenant les gypses naturels et les gypses synthétiques ou bien à du plâtre choisi dans l'ensemble des plâtres naturels et des plâtres synthétiques de manière à avoir une proportion en poids d'argile comprise entre 5 et 40%, de préférence entre 10 et 40%, par rapport au poids total de la composition finale. Le rajout de la charge contenant de l'argile peut ainsi être réalisé avant ou après calcination du gypse.

Dans un tel procédé de fabrication la charge rajoutée peut être une substance naturelle contenant de l'argile ainsi qu'au moins un autre composant, tel par exemple un carbonate de calcium et/ou un carbonate de magnésium et/ou un carbonate de calcium et de magnésium (ou bien entendu un mélange de ces carbonates). On ne considère alors que l'apport en argile sans tenir compte des carbonates ou autres qui ne sont pas comptabilisés dans la proportion de 5 (ou de préférence 10) à 40% d'argile en poids dans la composition finale.

Comme il ressort de ce qui précède, la présente invention concerne aussi l'utilisation d'argile dans une composition à base de gypse pour la réalisation d'une plaque de parement afin d'augmenter l'amortissement acoustique de ladite plaque.

La description qui suit permettra de mieux faire ressortir des détails et avantages de la présente invention.

L'homme du métier connaît les plaques de parement en plâtre et ses différentes utilisations. Une telle plaque de parement comporte le plus souvent une âme en plâtre prise en sandwich entre deux feuilles cartonnées. Le plus souvent, deux bords opposés de la plaque sont, sur une face de celle-ci, amincis. L'épaisseur de plaque la plus courante sur le marché est de 12,5 mm, ce qui correspond aux plaques commercialisées avec la dénomination "BA 13".

La présente invention s'applique à tout type de plaque de parement à base de plâtre, quelles que soient ses dimensions et sa forme, notamment avec ou sans bords amincis.

Actuellement, les plaques de parement à base de plâtre que l'on trouve habituellement sur le marché qui présentent une épaisseur de 12,5 mm ont une masse de l'ordre de 9 kg/m². Une telle plaque a servi de référence pour estimer les avantages de la présente invention.

L'idée à l'origine de la présente invention est de rajouter de l'argile dans l'âme de la plaque de parement afin d'augmenter ses propriétés acoustiques.

Le terme "argile" est défini par exemple dans l'ouvrage "Concise Encyclopedia of Chemical Technology", Kirk-Othmer, 4ème édition de 1999. Comme indiqué dans cette encyclopédie, une argile est composée de manière prédominante de phyllosilicates hydratés d'aluminium (Al), de magnésium (Mg), de potassium (K) et de fer (Fe) ainsi que d'autres composants moins abondants.

Il est déjà connu de rajouter de l'argile dans l'âme en plâtre d'une plaque de parement. Toutefois, l'argile est alors rajoutée dans des proportions de l'ordre de quelques pourcents et ce rajout est réalisé pour augmenter la résistance au feu de la plaque de parement ainsi fabriquée.

Il est proposé ici de rajouter de l'argile dans l'âme de plâtre de la plaque de parement de manière à obtenir un âme contenant de 5 à 40% en poids d'argile par rapport au poids total de la composition finale de l'âme de la plaque.

L'argile rajoutée est un phyllosilicate présentant alors une structure feuilletée. Il s'agit ainsi par exemple de kaolinite, de montmorillonite ou d'illite. Sans vouloir être exhaustif, on peut également citer les argiles telles l'antigorite, la dickite, la greenalite, l'halloysite, la nacrite, la sépiolite, la smectite et la vermiculite.

Dans une première forme de réalisation de la présente invention, on prévoit de rajouter de l'argile dans un gypse pur afin d'obtenir 10 à 20% en poids d'argile dans la composition finale. L'argile utilisée est ici par exemple du kaolin, de la kaolinite, du méta-kaolin ou encore de la chlorite.

Le gypse utilisé peut-être un gypse naturel ou un gypse synthétique. Si le gypse naturel contient déjà quelques pourcents d'argile, de l'argile sera rajoutée pour parvenir à la proportion souhaitée dans le produit final.

Le rajout d'argile peut-être réalisé en rajoutant de l'argile pure. Il est toutefois également envisageable de rajouter une charge contenant de l'argile. C'est ainsi que par exemple des marnes, qui contiennent des argiles et des calcaires, peuvent être rajoutées dans le gypse utilisé pour réaliser une plaque de parement selon l'invention. Il est également envisageable de rajouter comme charge des loess constitués d'argiles, de calcaires et de sables. Bien entendu d'autres charges argileuses peuvent être envisagées. Les deux exemples cités correspondent à des mélanges naturels couramment rencontrés mais ne sont bien entendu pas exhaustifs. Il est intéressant de rajouter en plus de l'argile un composant tel un carbonate, que ce soit un carbonate de calcium, un carbonate de magnésium, un carbonate de calcium et de magnésium, ou bien entendu un mélange de ceux-ci.

Dans un autre exemple de réalisation, on obtient par exemple une composition de l'âme d'une plaque de parement contenant 75% de gypse, 10% d'argiles et 15% d'autres charges telles des sables et des calcaires.

Il a également été remarqué que l'ajout de pulpe de carton broyée dans la composition de l'âme de la plaque de parement favorisait les performances acoustiques. Il est proposé ici de rajouter environ 3 g de pulpe de carton broyé par kilogramme. On obtient alors environ 0,3% de pulpe de carton broyée dans la composition finale de l'âme de la plaque de parement.

Cette pulpe de carton broyée peut provenir par exemple d'un recyclage de plaques de parement. Le carton broyé provient alors des couches externes des plaques de parement recyclées tandis que l'âme des plaques recyclées sert de charge dans la nouvelle plaque réalisée.

Pour la réalisation d'une plaque de parement selon l'invention, il est proposé par exemple d'utiliser au départ un minerai de gypse à 80% de pureté. Ce gypse contient alors 80% de gypse pur (CaSO₄ 2H₂0) et 20% d'impuretés. Parmi les impuretés, on trouve par exemple 4% d'argile (par rapport à la composition globale du minerai), 12% de carbonates, de la silice (SiO₂) et d'autres impuretés dans de petites proportions.

De manière habituelle, le minerai de gypse est calciné. Au cours de cette calcination, de l'eau contenue dans le gypse est éliminée et le poids final est réduit. Le poids moléculaire du gypse étant de 172 et celui du gypse calciné (CaSO₄ 1/2 H₂0) étant de 145, 100 kg de minerai de gypse avant calcination donnent environ 87,5 kg après calcination. Au cours de cette opération, les impuretés sont peu affectées et on trouve donc dans le minerai de gypse après calcination environ 20 kg d'impuretés (dont 4 kg d'argile) et 67,5 kg de gypse calciné.

On propose ici, selon la présente invention, de rajouter ici une charge de 10% d'argile, c'est-à-dire 8,75 kg d'argile. Il est possible ici de rajouter aussi d'autres composants, tels par exemple des carbonates, mais dans l'exemple numérique choisi ici, seule de l'argile est rajoutée.

De manière habituelle, le mélange obtenu est réhydraté au cours d'un processus classique de réalisation de plaques de parement. Le gypse calciné est alors réhydraté et retrouve son poids de départ, avant la calcination. La composition obtenue finalement a alors une masse de 108,75 kg. Des produits additifs habituellement rajoutés, en général avec de faibles quantités, ou bien aussi de la pulpe de carton comme indiqué plus haut, peuvent bien entendu également être rajoutés.

On obtient ainsi dans le coeur de la plaque de parement finale, c'est-à-dire sans les feuilles de carton se trouvant sur les deux grandes faces de la plaque, 12,75 kg d'argile dans un mélange final de 108,75 kg, soit 11,7% d'argile par rapport au poids total de la composition finale.

Dans l'exemple numérique décrit ci-dessus, une charge de 10% d'argile a été rajoutée. Cette charge peut être comprise entre 5 et 40% d'argile ou d'un mélange comportant une proportion importante d'argile. Selon d'une part la proportion d'argile se trouvant dans le minerai au départ et d'autre part la proportion d'argile se trouvant dans la charge, la proportion finale d'argile dans la composition est donc variable. Pour obtenir des performances acoustiques intéressantes, cette proportion finale d'argile dans la composition sera supérieure à 5% et de préférence supérieure à 10% par rapport au poids total de la composition finale.

Comme il ressort de la description ci-dessus, la présente invention permet dans une plaque de parement d'économiser du gypse. Ceci est intéressant car les ressources naturelles de gypse sont limitées et il convient donc d'économiser ces ressources naturelles.

En réalisant des plaques de parement d'une épaisseur de 12,5 mm et présentant une masse surfacique de 10,5 kg/m², on obtient des plaques de parement selon l'invention présentant d'intéressantes performances acoustiques. Le carton utilisé ici présente un grammage de 180 g/m² et une épaisseur de 300 µm. L'âme de la plaque présente une masse volumique de 852 kg/m³.

Pour réaliser des tests afin de quantifier ces nouvelles performances acoustiques, un premier montage a été réalisé en fixant une plaque de parement sur une ossature métallique telle celles couramment utilisées pour réaliser des cloisons verticales. Des mesures ont été réalisées pour quantifier l'atténuation acoustique de la plaque utilisée. Un signal est ainsi émis d'un côté de la cloison formée par la plaque montés sur son ossature et on mesure de l'autre côté de la cloison l'intensité du signal transmis à travers ladite cloison.

Des premières mesures ont été effectuées avec une plaque de parement "classique" telle que définie plus haut. Ensuite, avec exactement le même montage, mais en utilisant une plaque selon la présente invention, des essais comparatifs ont été réalisés. En utilisant alors une plaque de plâtre dont la composition du coeur contient environ 12% d'argile, ainsi que 30 grammes de pulpe de carton broyé par m², le gain par rapport à une cloison réalisée avec une plaque "classique" est de + 3 dB. Ainsi par exemple avec un signal de 100 dB d'un côté de la cloison formée par une plaque montée sur son ossature, on mesure de l'autre côté de la cloison un signal de 67 dB avec une plaque de parement classique et un signal de 64 dB avec une plaque selon l'invention. Cela signifie donc que de l'autre côté de la cloison deux fois moins de bruit est perçu.

Cette augmentation des performances acoustiques est tout à fait intéressante et est obtenue avec une plaque de parement dont la masse est tout à fait acceptable.

Les plaques de parement selon l'invention remplissent également le cahier des charges mécanique des plaques de plâtre. Il y a suffisamment de gypse dans ces plaques de parement pour assurer une bonne rigidité de la plaque.

La plaque de parement selon l'invention permet donc de résoudre un triple problème technique. Tout d'abord elle permet de réaliser une plaque de parement avec de bonnes propriétés acoustiques. Ceci se fait avec un poids de plaque acceptable et enfin la présente invention permet de réaliser une économie de gypse.

La présente invention ne se limite pas aux formes de réalisation décrites ci-dessus à titre d'exemples non limitatifs et aux variantes évoquées. Elle concerne également toutes les variantes de réalisation à la portée de l'homme du métier dans le cadre des revendications ci-après.

## Revendications

1. Plaque de parement à base de plâtre, notamment du type comportant une âme disposée entre deux feuilles de carton,
**caractérisée en ce que** la composition de l'âme comprend du gypse choisi dans l'ensemble contenant les gypses naturels et les gypses synthétiques et entre 5 et 40% en poids d'argile par rapport au poids total de la composition finale de l'âme.

2. Plaque de parement selon la revendication 1, **caractérisée en ce que** la composition de l'âme comprend entre 10 et 40% en poids d'argile par rapport au poids total de la composition finale de l'âme.

3. Plaque de parement selon l'une des revendications 1 ou 2, **caractérisée en ce que** la composition de l'âme comporte entre 10 et 20% en poids d'argile par rapport au poids total de la composition finale de l'âme.

4. Plaque de parement selon l'une des revendications 1 à 3, **caractérisée en ce que** l'argile est choisie dans l'ensemble des phyllosilicates comprenant notamment l'antigorite, la chlorite, la dickite, la greenalite, l'halloysite, l'illite, la kaolinite, la montmorillonite, la nacrite, la sépiolite, la smectite et la vermiculite.

5. Plaque de parement selon l'une des revendications 1 à 4, **caractérisée en ce que** sa masse volumique de l'âme de la plaque est inférieure à 894 kg/m³.

6. Plaque de parement selon l'une des revendications 1 à 5, **caractérisée en ce que** la composition de l'âme comporte également de la pulpe de carton broyée.

7. Plaque de parement selon la revendication 6, **caractérisée en ce que** la proportion en poids de la pulpe de carton est inférieure à 1%, de préférence comprise entre 0,2 et 0,6%.

8. Procédé de fabrication d'une plaque de parement à base de plâtre, notamment du type comportant une âme disposée entre deux feuilles de carton, **caractérisé en ce que** pour réaliser l'âme de la plaque de parement une charge contenant de l'argile est rajoutée à du gypse choisi dans l'ensemble contenant les gypses naturels et les gypses synthétiques ou bien à du plâtre choisi dans l'ensemble des plâtres naturels et des plâtres synthétiques de manière à avoir une proportion en poids d'argile comprise entre 5 et 40% par rapport au poids total de la composition finale.

9. Procédé de fabrication selon la revendication 8, **caractérisé en ce que** la charge rajoutée est une substance naturelle contenant de l'argile ainsi qu'au moins un autre composant.

10. Procédé de fabrication selon la revendication 9, **caractérisé en ce qu'**un autre composant de la charge est du carbonate de calcium et/ou du carbonate de magnésium et/ou du carbonate de calcium et de magnésium.

11. Utilisation d'argile dans une composition à base de gypse pour la réalisation d'une plaque de parement afin d'augmenter l'amortissement acoustique de ladite plaque.
